# EUROPÄISCHE PATENTSCHRIFT

(11) **EP 2 531 320 B1**
(45) Veröffentlichungstag und Bekanntmachung des Hinweises auf die Patenterteilung: **14.05.2014**
(21) Anmeldenummer: 11704925.4
(22) Anmeldetag: 01.02.2011
(51) Int. Cl.: B23K 10/00, F23D 14/48, H05H 1/28, H05H 1/34

(54) **DÜSE FÜR EINEN FLÜSSIGKEITSGEKÜHLTEN PLASMA-SCHNEIDBRENNER MIT NUTEN**
NOZZLE FOR A LIQUID-COOLED PLASMA CUTTING TORCH WITH GROOVES
BUSE POUR UN CHALUMEAU DE DECOUPE PLASMA, MUNIE DE RAINURES POUR LE REFROIDISSEMENT PAR LIQUIDE

(30) Priorität: 04.02.2010 DE 102010006786
(43) Veröffentlichungstag der Anmeldung: 12.12.2012
(73) Patentinhaber: Hollberg, Manfred, 9403 Goldach (CH)
(72) Erfinder: HOLLBERG, Manfred, CH-9403 Goldach (CH)
(74) Vertreter: Riebling, Peter
(86) Internationale Anmeldenummer: PCT/EP2011/000433
(87) Internationale Veröffentlichungsnummer: WO 2011/095315

(56) Entgegenhaltungen:
- WO-A1-2009/008271
- DE-A1- 2 557 482
- JP-A- 5 023 859
- US-A- 2 092 150

## Beschreibung

Gegenstand der Erfindung ist eine Düse für einen flüssigkeitsgekühlten Plasma-Schneidbrenner gemäß dem Oberbegriff des Anspruchs 1 (siehe, z.B., US 2 092 150).

### Stand der Technik

Plasmaschneiden ist ein thermisches Schneidverfahren, bei dem der Werkstoff durch den Plasmastrahl geschmolzen und aus der Schnittfuge geblasen wird.

Das Plasma-Schmelzschneiden eignet sich besonders zum Trennen von legierten Stählen und Nichteisen-Metallen. Bei diesen Werkstoffen sind die Schmelztemperaturen der entstehenden Oxide höher als die der Metalle selbst. Autogenes Brennschneiden ist deshalb nicht möglich.

Beim Plasma-Schneidbrenner wird ein Pilotlichtbogen zwischen der WolframElektrode und der Brennerdüse gezündet. Das durch die Düse strömende Gas wird dadurch ionisiert, d. h. elektrisch leitend (Plasmagas). Durch Zuschalten des Plasmastromes brennt dann der Lichtbogen zwischen der Elektrode und dem Werkstück. Der so erzeugte dünne Plasmastrahl tritt mit hoher Energiedichte aus der gekühlten einengenden Düse aus. An der kleinen Auftreffstelle schmilzt und verdampft der Werkstoff.

Durch die hohe Austrittsgeschwindigkeit des Plasmagases wird das schmelzflüssige Material aus der Schnittfuge geblasen, die bei gleichmäßigem Vorschub des Schneidbrenners entsteht. Die Schneidgeschwindigkeiten betragen je nach Materialdicke 1 m/min bis 8 m/min.

Um die auftretende Umweltbelastungen wie z. B. Rauch, Staub, Lärm und UV-Strahlen beim Plasma-Schmelzschneiden zu mindern, wird eine Wasserabschirmung während des Schneidprozesses eingesetzt. Dies kann entweder durch einen Wasservorhang um den Brenner oder Schneiden im Wasserbad gebildet werden.

Das Plasmaschneiden zeichnet sich durch eine gute Schnittqualität und eine hohe Schnittgeschwindigkeit bei vergleichsweise geringen Kosten aus. In vielen Bereichen der Industrie ist es daher bereits ein fester Bestandteil der Fertigung.

Plasma-Schneidbrennern werden in zwei Kategorien unterteilt:
- Direkte Plasmaerzeuger: Der Lichtbogen wird direkt auf das zu bearbeitende Substrat übertragen. Die Anode befindet sich außerhalb des Plasmaerzeugers.
- Indirekte Plasmaerzeuger: Der Lichtbogen existiert nur im Plasmaerzeuger - die Anode ist Bestandteil des Plasmaerzeugers.

Bei einer Anwendung von Stickstoff wird vorzugsweise mit einer Wolframelektrode gearbeitet. Im Gegensatz dazu wird bei einer Druckluftanwendung eine Elektrode mit Zirkonium oder Hafnium Beschichtung verwendet, denn dies führt zu einer Bildung eines stabileren Brennflecks.

Die Düse des Plasma-Schneidbrenners ist hohen thermischen Belastungen ausgesetzt und wird deshalb bevorzugt aus einem metallischen Werkstoff mit hoher Wärmeleitfähigkeit und sowie auch elektrischer Leitfähigkeit hergestellt. Um eine hohe Lebensdauer für die Düse zu erreichen, wird diese mit einer Flüssigkeit wie z. B. Wasser gekühlt. Das Kühlmittel durchströmt den Kühlmittelraum, der durch die Düse und die Düsenkappe gebildet wird. Um die Kühlwirkung der Flüssigkeit gut auszunutzen, verfügt die Düse nach dem Stand der Technik über an der Düsenwand hervorstehende Absätze, die eine Verwirbelung der Kühlflüssigkeit bewirken sollen. Dies ermöglicht einen besseren Wärmeübergang von der Düsenwand auf die Kühlflüssigkeit.

Die DE 1 565 638 zeigt eine Düseanordnung für einen Plasmabrenner. Der Brennerkopf weist eine besonders schlanke Form auf und wird bevorzugt zum Plasmaschneiden bzw. zur Vorbereitung von Schweißkanten eingesetzt. Zwischen der Düsenkappe und der Schneiddüse wird ein Kühlmittelraum gebildet, der als gerade, gleichmäßiger Ringkanal ausgestaltet ist. Im oberen Bereich der Brennerdüse erfolgt die Zu- und Abführung der Kühlflüssigkeit.

In der DE 10 2008 018 530 A1 wird eine Düse für einen flüssigkeitsgekühlten Plasmabrenner beschrieben. An der Außenfläche der Düsenwand weist die Düse mindestens einen zur Düsenspitze hin kegligen erweiternden Absatz auf, der einen Strömungswiderstand bzw. eine Verwirbelung der Kühlflüssigkeit bildet. Die Absätze stehen bei allen gezeigten Ausführungsbeispielen von der Außenwand der Düse ab und weisen einen bestimmten Winkel gegenüber der Düsenspitze auf.

Mit der WO 92/00658 wird ein Plasmabrenner beschrieben, der über eine Düsen-Außenwand mit nach innen gerichtete Nuten verfügt. Die Einschnitte sind rechteckig ausgebildet und weisen einen gerade Nutengrund auf. Der Nutengrund verläuft somit parallel zur Mittelachse der Düse. Im geneigten Abschnitt der Außenwand der Düse stellt der gerade Nutengrund entweder eine Querschnittsverminderung der Wandstärke dar, wobei sich die Wandstärke im oberen Bereich des Nutgrundes nachteilig gering ist. Oder der Abstand zwischen der Innenwand und dem geraden Nutengrund ist so groß, dass kein effektiver Wärmeübergang von der Düsenwand auf die Kühlflüssigkeit erfolgen kann.

Alle obengenannten Ausführungsformen weisen entweder einen gerade Kühlmittelraum bzw. einen Kühlmittelraum mit hervorstehenden Absätzen auf oder sie verfügen über nach innen gerichtete Nuten mit einem gerade Nutengrund. Beide Ausführungsformen stellen einen Nachteil in Bezug auf einen effektiven Wärmeübergang von der Düsenwand auf die Kühlflüssigkeit dar.

### Gegenstand der Erfindung

Der Erfindung liegt deshalb die Aufgabe zugrunde, eine Düse für einen flüssigkeitsgekühlten Plasmabrenner mit einer verbesserten Kühlwirkung zu erreichen.

Zur Lösung der gestellten Aufgabe ist die Erfindung durch die technische Lehre des Anspruches 1 gekennzeichnet.

Wesentliches Merkmal der Erfindung ist, dass der Nutengrund der Nut annährend parallel zur Kontur der Innenwand der Düse ausgebildet ist.

Die Düse verfügt über einzelne Nuten, die als nach innen gerichtete Einschnitte in der Außenwand der Düse ausgebildet sind. Die Nuten sind im Profil bevorzugt rechteckig ausgestaltet, wobei sie über einen geneigten Nutengrund verfügen. Der geneigte Nutengrund ist so ausgebildet, dass er parallel zu Kontur der Innenwand der Düse verläuft. Dies stellt einen wesentlichen Vorteil gegenüber dem Stand der Technik dar, da nun ein effektiver Wärmeübergang von der Innenwand auf die an der Außenwand strömenden Kühlflüssigkeit erfolgen kann. In einer anderen Ausgestaltung können die Nuten im Profil auch ein Trapezprofil aufweisen. Dabei erweitern sich die Nuten keilförmig vom Nutengrund ausgehend nach außen.

Ein weiterer Vorteil ist die gleichbleibende Wandstärke, die sich im Bereich des geneigten Nutengrundes ergibt. Damit ist nicht nur eine gewisse Mindestwandstärke gegeben, sondern auch gleichzeitig ein guter Wärmeübergang gewährleistet.

Die Anzahl der Nut an der Außenwand der Düse soll nicht auf eine beschränkt sein - es können ebenso mehrere Nuten sowohl im geraden Bereich als auch im geneigten Bereich der Düse vorhanden sein. Es wird jedoch eine symmetrische Anordnung der Ringnuten bevorzugt.

Die Nuten sind als Ringnuten ausgebildet und verfügen über einen geneigten Nutengrund, der parallel zur Kontur der Innenwand verläuft. Durch die Ringnut findet ein wirksamer Wärmeübergang über den gesamten Außenumfang der Düse statt.

Ein weiterer Vorteil ist, dass der geneigte Nutengrund eine geringe Mindestwandstärke ermöglicht. Ferner lässt sich durch die vorhandene Mindestwandstärke eine Ausführungsform mit mehreren Ringnuten an der Außenwand der Düse verwirklichen.

Gemäß der Erfindung offenbart die Düse auch Längsnuten, wobei die Längsnuten in Richtung der Längsmittelachse der Düse verlaufen Damit ist es möglich, die Kühlflüssigkeit entlang der Düse verlaufen zu lassen. Die Längsnuten verfügen bevorzugt über eine rechteckige Form, wobei der Nutengrund sich an die Kontur der Innenwand anpasst. Damit ist ein guter Wärmeübergang, bei einer gleichbleibenden Wandstärke möglich.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

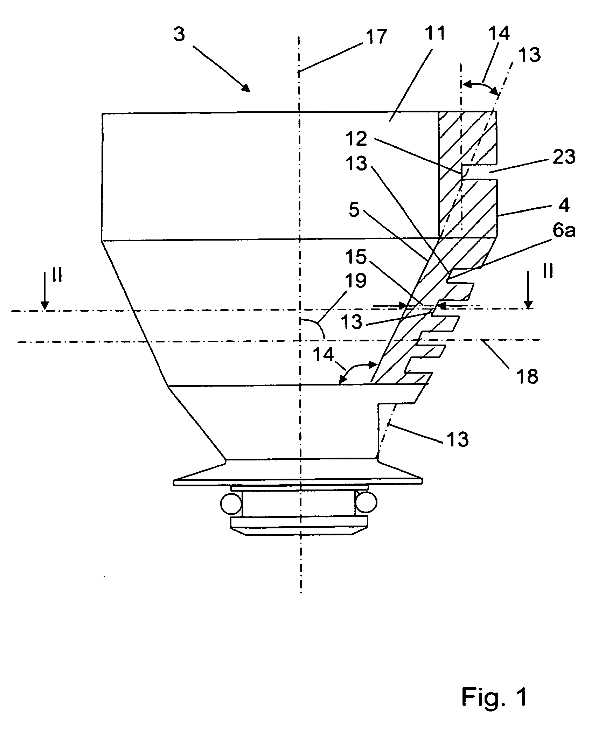

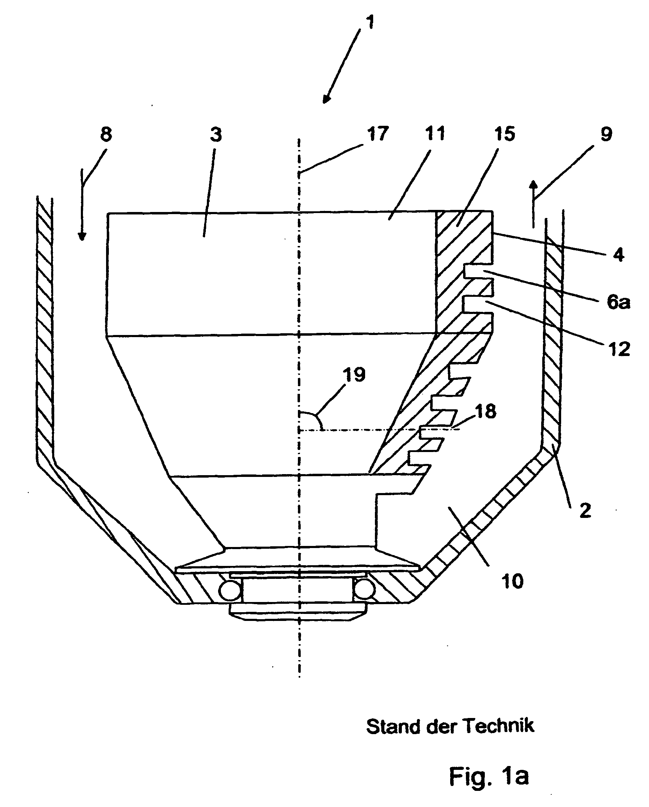

- Fig.1a:: Zeigt den Stand der Technik
- Fig.1:: Schematische Darstellung einer Düse mit Nuten und geneigtem Nutengrund
- Fig.2:: Schnitt durch die Fig.1 mit einer Nut und geneigtem Nutengrund
- Fig.3:: Schematische Darstellung einer Düse mit Ringnuten
- Fig.4:: Schnitt durch die Fig.2 mit Ringnut und geneigtem Nutengrund
- Fig.5:: Schematische Darstellung einer Düse mit Längsnuten
- Fig.6:: Schnitt durch die Fig.5 mit Darstellung der Längsnuten
- Fig.7:: Ein weiterer Schnitt durch die Fig.5 mit Darstellung der Längsnuten

Figur 1a zeigt den Stand der Technik bei Plasma-Schneiddüsen. Die Düsenvorrichtung des Plasmabrennkopfes 1 besteht im Wesentlichen aus einer Düsenkappe 2 und einer Düse 3. Zwischen der Düsenkappe 2 und der Außenwand 4 der Düse 3 bildet sich ein Kühlmittelraum 10 aus. Durch den Kühlmittelraum 10 strömt eine Kühlflüssigkeit wie z. B. Wasser, wobei die Flüssigkeit durch den Kühlmittelvorlauf 8 in den Kühlmittelraum 10 eingeleitet wird und durch den Kühlmittelrücklauf 9 wieder ausgeleitet wird.

Die Außenwand 4 der Düse 3 verfügt über mehrere im Profil rechteckige Nuten 6a, wobei der Nutengrund 12 gerade ausgebildet ist. Die Nuten 6a sind jeweils in Richtung der Längsachse 18 nach innen gerichtet und sind im rechten Winkel 19 zur Düsenmittelachse 17.

Die Innenwand 5 der Düse 3 bildet um die Düsenmittelachse 17 einen ringförmigen Innenraum zur Plasmagasführung 11 aus.

Fig.1 zeigt eine schematische Darstellung einer Düse 3 mit mehreren, parallel zueinander angeordneten Nuten 6a. Die Nuten 6a sind im Profil weitgehend rechteckig ausgebildet und befinden sich an der Außenwand 4 der Düse 3. Dabei soll die Ausführungsform der Nut nicht auf ein Rechteck beschränkt werden, es sind ebenso jede weitere geometrische Form möglich. Die Nuten 6a sind zur Düsenmittelachse 17 nach innen gerichtete, längliche Einschnitte in der Außenwand 4, wobei der Nutengrund 13 geneigt ist. Die Neigung des Nutengrundes 13 ergibt sich durch den Winkel 14. Der Winkel 14 ergibt sich als Winkel zur Düsenmittelachse 17. Der geneigte Nutengrund 13 stellt somit eine Parallele zur Kontur der Innenwand 5 der Düse 3 dar.

Durch diese Konstruktion ist eine gleichbleibende Wandstärke 15 im Bereich der Einschnitte durch die Nuten gewährleistet. Die Nuten 6a sind im Konusbereich der Düse 3 angeordnet. Außerhalb des Konusbereiches können noch weitere Nuten 23 im Zylinderbereich der Düse 3 angeordnet sein. Auch diese können einen geneigten Nutengrund aufweisen, wie dies in Figur 1 angedeutet ist. Ebenso kann dieser Nutengrund gerade und parallel zur ebenfalls dort vertikal verlaufenden Innenkontur ausgebildet sein.

Durch die geneigten Nutengründe 13 kann die Kühlflüssigkeit effektiver die anfallende Wärme der Düseninnenwand 5 aufnehmen und abführen, weil die Wandstärke effektiv vermindert ist und nicht die Gefahr besteht, dass bei der Herstellung der Nuten durch eine spanabhebende Bearbeitung das Werkzeug die verminderte Wandung in Richtung auf den Innenumfang der Düse durchbricht. Der geneigte Nutengrund sorgt deshalb für eine in diesem Querschnitt der Wandung gleichmäßige, einheitliche Wandstärke 15. Dies war bisher nach dem Stand der Technik nicht möglich, da die Nuten über einen geraden Nutengrund 12 verfügt haben und sich dadurch eine unterschiedliche Wandstärke ergeben hat. Damit gab es im Bereich des Nutengrundes eine größere und eine kleinere Wandstärke, was den Wärmeübergang behinderte.

Die Figur 1 zeigt eine Vielzahl von parallel zueinander angeordneten Nuten 6a im Konusbereich der Düse 3. Die als umlaufende und abgesetzte Ringnuten ausgebildet sind. Ferner befindet sich im zylindrischen, geraden Bereich der Düse eine Nut 23, die sowohl einen geneigten Nutengrund 13 als auch einen gerade Nutgrund 12 aufweisen kann.

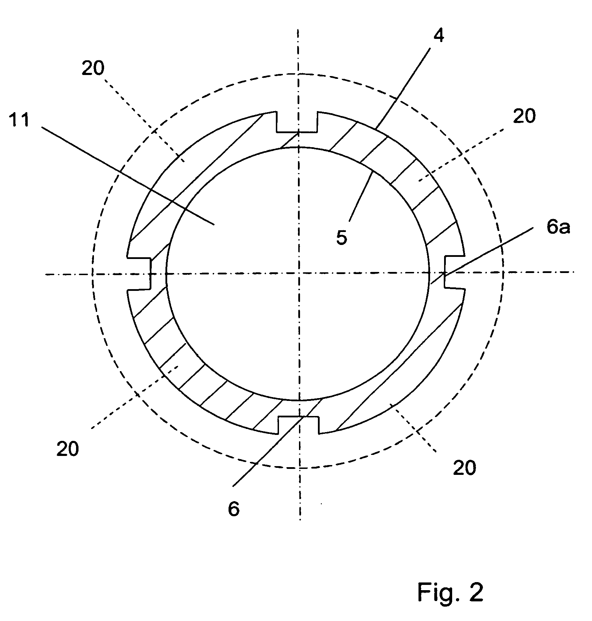

Figur 2 zeigt einen Schnitt durch den in Figur 1 eingezeichneten Teilbereich. Es handelt sich dabei um eine Darstellung einer Düse mit vier abgesetzten Nuten 6a, die an der Außenwand 4 der Düse 3 gleichmäßig angeordnet sind und durch Unterbrechungsabschnitte 20 geteilt werden. Ferner ist die ringförmige Innenwand 5 der Düse 3 dargestellt, die als Plasmagasführung 11 dient.

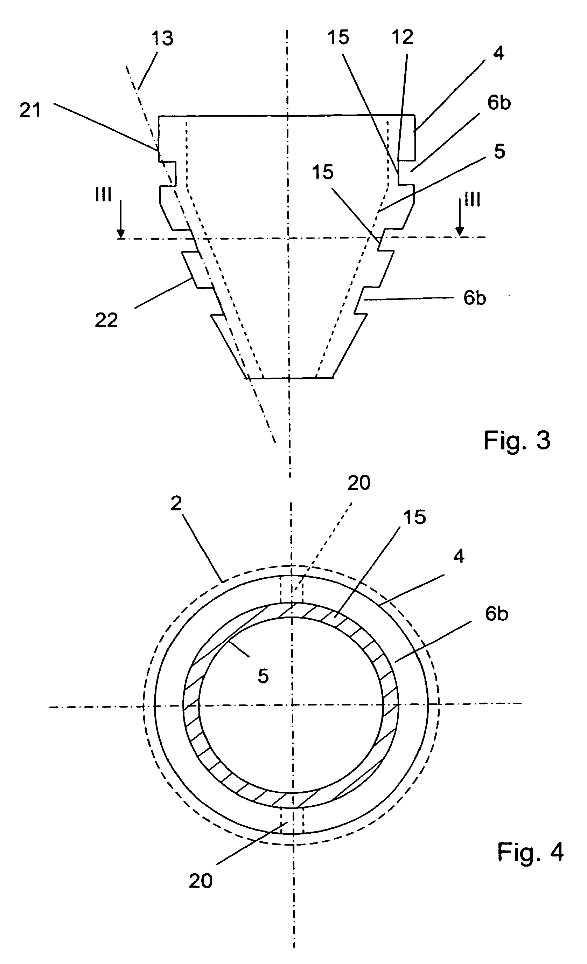

Mit der Figur 3 wird eine Düse gezeigt, die über eine Vielzahl von Ringnuten 6b an der Außenwand 4 der Düse 3 verfügt. Die Ringnuten 6b weisen im oberen, zylindrischen Bereich 21 einen geraden Nutengrund 12 auf und im unteren, konusförmigen Bereich 22 einen geneigten Nutengrund 13 auf. Die Lage des jeweiligen Nutengrundes (12,13) richtet sich nach der Kontur der Innenwand, welche stets parallel dazu verläuft. Ferner ist aus dieser Darstellungsform sichtbar, dass die Wandstärke 15 in allen Bereich der Nuten 6b gleich bleibt. Dies ermöglicht einen effektiven Wärmeübergang von der Innenwand 5 der Düse 3 auf die Kühlflüssigkeit.

Figur 4 zeigt einen Schnitt durch den in Figur 3 eingezeichneten Bereich. Dieser zeigt eine Draufsicht der Düse 3 mit den einzelnen Wandstärken und der umlaufenden Ringnut 6b. Den inneren Ring bildet die Innenwand 5 der Düse 3, gefolgt von der umlaufenden Ringnut 6b und der Außenwand 4 der Düse 3. Ferner ist schematisch der größte Umfang der Außenwand 4 der Düse dargestellt. Die umlaufenden Ringnut 6b kann ebenso durch unterschiedlich große Unterbrechungsbereiche 20 geteilt werden.

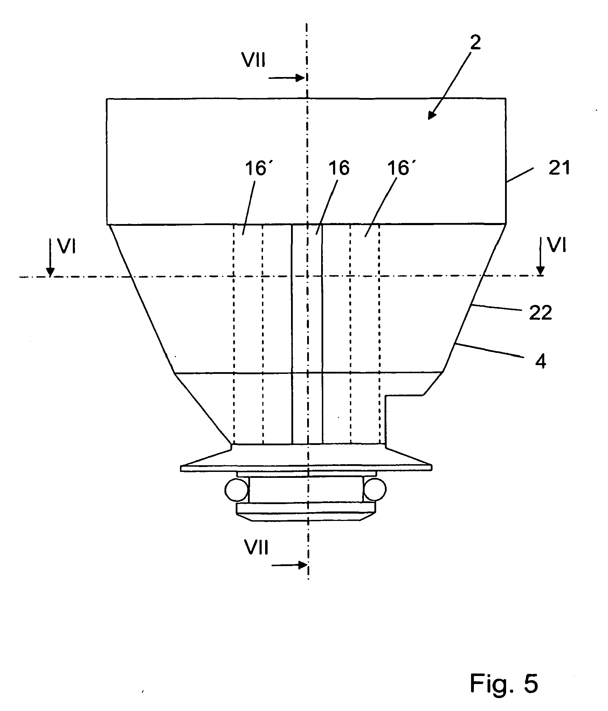

Mit der Figur 5 wird eine Düse 3 mit Längsnuten 16 dargestellt. Diese weisen bevorzugt einen rechteckigen Querschnitt auf und verlaufen entlang der Längsachse in der Außenwand 4 der Düse 3. Der rechteckige Querschnitt soll hierbei nur beispielhaft sein, es ist ebenso jede weitere geometrische Form als Nut möglich.

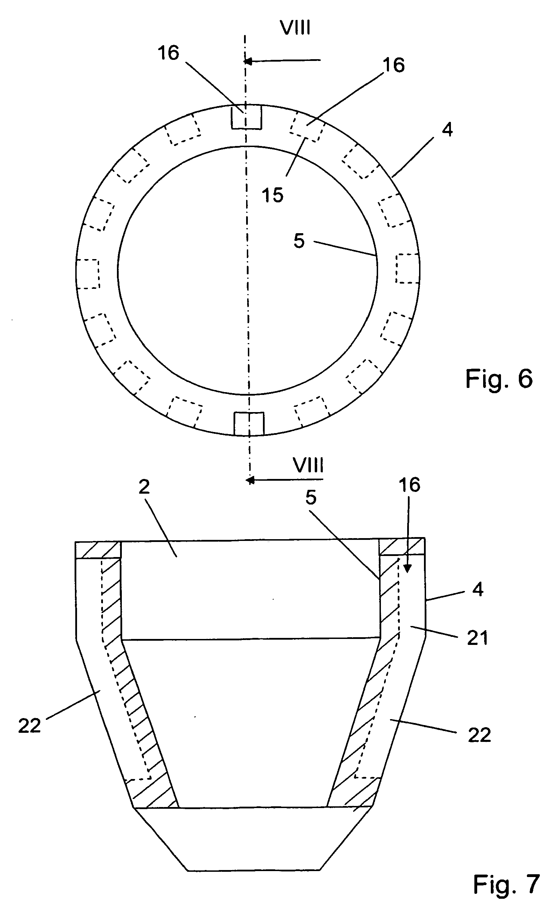

Figur 6 zeigt einen ersten Schnitt durch die Figur 5. In der Außenwand 4 der Düse 3 befinden sich die Längsnuten 16. Die Wandstärke 15 wird jedoch in allen Bereichen der Nuten gleich verringert. Die Innenwand 5 der Düse 3 ist ringförmig ausgebildet und dient zu Plasmaführung.

Figur 7 zeigt einen weiteren Schnitt durch die Figur 5. Die Längsnut 16 erstreckt sich hierbei entlang des Düsenkörpers sowohl über den zylindrischen Bereich 21 als auch über den konischen Bereich 22 und befindet sich in der Außenwand 4 der Düse 3.

Die Erfindung beansprucht eine Kombination, bei der sowohl Ringnuten 6a, 6b und Längsnuten 16, 22 angeordnet sind.

### Zeichnungslegende

- 1.: Plasmabrennerkopf
- 2.: Düsenkappe
- 3.: Düse
- 4.: Außenwand (Düse)
- 5.: Innenwand (Düse)
- 6a.: Nut (Einschnitt)
- 6b.: Ringnut
- 7.: Vorsprünge
- 8.: Kühlmittelvorlauf
- 9.: Kühlmittelrücklauf
- 10.: Kühlmittelraum
- 11.: Plasmagasführung
- 12.: Nutengrund (gerade)
- 13.: Nutengrund (geneigt)
- 14.: Winkel
- 15.: Düsenwand (Wandstärke)
- 16.: Längsnut
- 17.: Düsenmittelachse
- 18.: Längsachse
- 19.: Winkel
- 20.: Unterbrechungsabschnitt
- 21.: Bereich
- 22.: Bereich
- 23.: Nut (gerader Bereich)

## Patentansprüche

1. Düse (3) für einen flüssigkeitsgekühlten Plasma-Schneidbrenner mit mehreren voneinander beabstandeten an der flüssigkeitsberührten Außenwand (4) der Düse angeordneten, in Richtung ihrer Längsachse (18) annähernd senkrecht zur Düsenmittelachse (17) der Düse gerichteten Ringnuten (6a, 6b), welche die Wandstärke (15) der Düse (3) mindestens in diesem Bereich vermindern und jeweils einen in die Wandstärke hinein reichenden Nutengrund (12, 13) aufweisen, wobei die Nutengrunde (12, 13) der Ringnuten (6a, 6b) annähernd parallel zur Kontur der Innenwand (5) der Düse (3) ausgebildet sind, und wobei geneigte Nutengrund (13) einen Winkel (14) zur Düsenmittelachse (17) einnimmt, **dadurch gekennzeichnet, dass** in der Außenwand (4) der Düse (3) mehrere voneinander beabstandete Längsnuten (16, 16') entlang der Längsachse (17) der Düse (3) verlaufen, deren Nutengrunde (12, 13) ebenfalls annähernd parallel zur Kontur der Innenwand (5) der Düse (3) ausgebildet sind und die Längsnuten (16) über Bereiche (21) mit einem geraden Nutengrund (12) und Bereiche (22) mit einem geneigten Nutengrund (13) mit Winkel zur Düsenmittelachse (17) verfügen und dass die Ringnuten (6a, 6b) in sich geschlossen sind sowie Unterbrechungsabschnitte (20) aufweisen.

2. Düse (3) nach Anspruch 1, **dadurch gekennzeichnet, dass** die Wandstärke (15) im Bereich des Nutengrundes (12, 13) stets um ein gleiches Maß vermindert ist.

## Claims

1. Nozzle (3) for a liquid-cooled plasma cutting torch with a plurality of annular grooves (6a, 6b), which are arranged spaced apart from one another on the outer wall (4) of the nozzle that comes into contact with the liquid and are directed in the direction of their longitudinal axis (18) approximately perpendicularly to the nozzle centre axis (17) of the nozzle, which annular grooves reduce the wall thickness (15) of the nozzle (3) at least in this region and in each case have a groove base (12, 13) reaching into the wall thickness, the groove bases (12, 13) of the annular grooves (6a, 6b) being configured approximately parallel to the contour of the inner wall (5) of the nozzle (3), and the inclined groove base (13) adopting an angle (14) with respect to the nozzle centre axis (17), **characterised in that** a plurality of longitudinal grooves (16, 16') that are spaced apart from one another run along the longitudinal axis (H) of the nozzle (3) in the outer wall (4) of the nozzle (3), the grooves bases (12, 13) of said longitudinal grooves also being configured approximately parallel to the contour of the inner wall (5) of the nozzle (3), and the longitudinal grooves (16) have regions (21) with a straight groove base (12) and regions (22) with an inclined groove base (13) with an angle to the nozzle centre axis (17) and **in that** the annular grooves (6a, 6b) are closed per se and have interruption portions (20).

2. Nozzle (3) according to claim 1, **characterised in that** the wall thickness (15) in the region of the groove base (12, 13) is always reduced by the same amount.

## Revendications

1. Buse (3) pour un chalumeau de découpe plasma refroidi par liquide, avec plusieurs rainures annulaires (6a, 6b) qui sont espacées les unes des autres, qui sont disposées sur la paroi extérieure (4), en contact avec le liquide, de la buse, qui sont orientées, dans le sens de leur axe longitudinal (18), à peu près perpendiculairement à l'axe médian de buse (17) de la buse, et qui réduisent l'épaisseur de paroi (15) de la buse (3) au moins dans cette zone et présentent chacune un fond de rainure (12, 13) qui pénètre dans l'épaisseur de paroi, étant précisé que les fonds (12, 13) des rainures annulaires (6a, 6b) sont à peu près parallèles au contour de la paroi intérieure (5) de la buse (3), et que des fonds de rainure inclinés (13) définissent un angle (14) par rapport à l'axe médian de buse (17), **caractérisée en ce que** dans la paroi extérieure (4) de la buse (3), plusieurs rainures longitudinales (16, 16') espacées les une des autres s'étendent le long de l'axe longitudinal (17) de la buse (3), rainures longitudinales (16, 16') dont les fonds (12, 13) sont eux aussi à peu près parallèles au contour de la paroi intérieure (5) de la buse (3), et les rainures longitudinales (16) disposent de zones (21) avec un fond droit (12) et de zones (22) avec un fond incliné (13) présentant un angle par rapport à l'axe médian de buse (17), et **en ce que** les rainures annulaires (6a, 6b) sont fermées sur elles-mêmes et présentent des parties d'interruption (20).

2. Buse (3) selon la revendication 1, **caractérisée en ce que** l'épaisseur de paroi (15) dans la zone du fond de rainure (12, 13) est toujours réduite d'une même valeur.
